# EUROPÄISCHE PATENTSCHRIFT

(11) **EP 1 064 810 B1**
(45) Veröffentlichungstag und Bekanntmachung des Hinweises auf die Patenterteilung: **22.05.2002**
(21) Anmeldenummer: 99910120.7
(22) Anmeldetag: 10.02.1999
(51) Int. Cl.: H04Q 7/38

(54) **VERFAHREN, MOBILSTATION UND FUNK-KOMMUNIKATIONSSYSTEM ZUR STEUERUNG VON SICHERHEITSBEZOGENEN FUNKTIONEN BEI DER VERBINDUNGSBEHANDLUNG**
METHOD, MOBILE STATION AND RADIOCOMMUNICATION SYSTEM FOR CONTROLLING SAFETY RELATED FUNCTIONS IN COMMUNICATION HANDLING
PROCEDE, STATION MOBILE ET SYSTEME DE RADIOCOMMUNICATION POUR COMMANDER DES FONCTIONS LIEES A LA SECURITE LORS DE LA GESTION DE COMMUNICATIONS

(30) Priorität: 19.03.1998 DE 19812215
(43) Veröffentlichungstag der Anmeldung: 03.01.2001
(73) Patentinhaber: SIEMENS AKTIENGESELLSCHAFT, 80333 München (DE)
(72) Erfinder: FREITAG, Bernhard, D-36251 Bad Hersfeld (DE); BOLZ, Gert, D-36154 Hosenfeld (DE)
(86) Internationale Anmeldenummer: DE9900362
(87) Internationale Veröffentlichungsnummer: WO9948318

(56) Entgegenhaltungen:
- EP-A- 0 779 760
- EP-A- 0 827 356

## Beschreibung

Die Erfindung betrifft ein Verfahren, eine Mobilstation und ein Funk-Kommunikationssystem zur Steuerung von sicherheitsbezogenen Funktionen bei der Verbindungsbehandlung gemäß dem Oberbegriff des Patentanspruchs 1 bzw. 6 bzw. 7.

Funk-Kommunikationssysteme, wie beispielsweise das Mobilfunksystem nach dem GSM-Standard (Global System for Mobile Communication), nutzen zur Informationsübertragung eine Funkschnittstelle, auf der Verbindungen zwischen Mobilstationen und Netzeinrichtungen eines Kommunikationsnetzes aufgebaut, abgebaut und aufrechterhalten werden können. Bei der Verbindungsbehandlung werden mobilfunkspezifische Funktionen ausgeführt, zu denen sicherheitsbezogene Funktionen, wie die Teilnehmerauthentifikation und die Geheimhaltungsfunktion, gehören. Durch die üblicherweise mit einem Verbindungsaufbau zwischen Mobilstation und Kommunikationsnetz gestartete Teilnehmerauthentifikation wird die Zugangsberechtigung eines Funkteilnehmers zum Kommunikationsnetz überprüft. Die Geheimhaltungsfunktion basiert auf der Verschlüsselung der über die Funkschnittstelle zu übertragenden Informationen - insbesondere der Nutzinformationen. Eine Verschlüsselungsprozedur wird netzseitig initiiert, indem eine Verschlüsselungsanforderung an die Mobilstation gesendet und mobilstationsseitig mit dem Übermitteln von bereits verschlüsselter Informationen beantwortet wird. Die sicherheitsbezogenen Funktionen sind für ein Funk-Kommunikationssystem nach dem GSM-Standard beispielsweise in "Netzübersicht GSM", Siemens AG, 1995, Kapitel 3.4.2, Seiten 114 ff beschrieben.

Die obige Vorgehensweise basiert auf dem Prinzip, daß die Mobilstation dem Kommunikationsnetz vertraut, d.h. von ihr die sicherheitsbezogenen Funktionen nicht beeinflußbar sind. Für die bei einer Mobilstation ankommenden oder von ihr abgehenden Verbindungen bedeutet dies, daß - beispielsweise durch besondere Eingriffe auf der Funkschnittstelle, siehe die ältere Patentanmeldung P 19749388.2 - ein gezieltes Abhören (interception) möglich ist, ohne daß die Mobilstation dies verhindern kann. Bei der Lösung gemäß der älteren Patentanmeldung wird nämlich die Mobilstation gezwungen, eine unverschlüsselte Verbindung aufzubauen.

Der Erfindung liegt die Aufgabe zugrunde, ein Verfahren, ein Funk-Kommunikationssystem und eine Mobilstation der eingangs genannten Art anzugeben, durch das bzw. die das Abhören der Verbindungen auf der Funkschnittstelle sicher vermieden werden kann.

Diese Aufgabe wird gemäß der Erfindung durch das Verfahren mit den Merkmalen des Patentanspruchs 1, das Funk-Kommunikationssystem mit den Merkmalen des Patentanspruchs 6 und durch die Mobilstation mit den Merkmalen des Patentanspruchs 7 gelöst. Vorteilhafte Weiterbildungen der Erfindung sind den Unteransprüchen zu entnehmen.

Ausgehend von dem bekannten Verfahren bzw. Funk-Kommunikationssystem zur Steuerung der sicherheitsbezogenen Funktionen bei der Verbindungsbehandlung mit Teilnehmerauthentifikation und Geheimhaltung der Informationen wird die Verschlüsselungsanforderung mit einer Kennung, ob das Kommunikationsnetz Verbindungen auf der Funkschnittstelle mit verschlüsselten Informationen oder mit unverschlüsselten Informationen wünscht, von der Mobilstation empfangen und ausgewertet. Dabei ist die Mobilstation teilnehmergesteuert in einen Betriebsmodus umschaltbar, bei dem die Verbindung abgebrochen wird, wenn die empfangene Kennung die Verbindungen mit unverschlüsselten Informationen zuläßt.

Die Mobilstation gemäß dem Gegenstand der Erfindung umfaßt eine Steuereinheit zum Auswerten einer vom Kommunikationsnetz übersandten Kennung, die angibt, ob das Kommunikationsnetz Verbindungen auf der Funkschnittstelle mit verschlüsselten Informationen oder mit unverschlüsselten Informationen wünscht. Darüber hinaus ist die Mobilstation teilnehmergesteuert in einen Betriebsmodus umschaltbar, bei dem die Steuereinheit einen Abbruch der Verbindung veranlaßt, wenn die empfangene Kennung die Verbindungen mit unverschlüsselten Informationen zuläßt. Durch die Erfindung ist sichergestellt, daß die Verbindungen auf der Funkschnittstelle nur mehr verschlüsselte Informationen enthalten, ansonsten droht der mobilstationsseitige Abbruch der Verbindung. Die Mobilstation hat folglich die Möglichkeit, teilnehmergesteuert das Abhören von Verbindungen mit unverschlüsselten Informationen zu unterbinden bzw. zu vermeiden, und braucht sich daher nicht mehr auf das Kommunikationsnetz zu verlassen, wenn dieses unverschlüsselte Informationsübertragung erlaubt und entsprechende Verbindungen initiiert.

Gemäß einer günstigen Weiterbildung der Erfindung ist vorgesehen, daß von der Mobilstation eine Nachricht zum Auslösen der Verbindung über die Funkschnittstelle zum Kommunikationsnetz gesendet wird. Durch das Senden einer Auslösenachricht wird das Kommunikationsnetz direkt und unmittelbar über den Abbruch der Verbindung durch die Mobilstation informiert.

Gemäß einer alternativen Weiterbildung der Erfindung ist vorgesehen, daß von der Mobilstation die Sende/Empfangseinheit zum Senden und Empfangen von Funksignalen vorübergehend abgeschaltet wird, um dem Kommunikationsnetz den Abbruch der Verbindung zu signalisieren.

Eine besonders einfache, aber sehr wirkungsvolle und bedienerfreundliche Möglichkeit zur teilnehmergesteuerten Umschaltbarkeit der Mobilstation in den Betriebsmodus besteht darin, eine gesonderte Stationstaste an der Mobilstation vorzusehen.

Eine dazu alternative oder zusätzliche Weiterbildung der Erfindung sieht vor, durch Eingabeoperationen - vorzugsweise menuegesteuert - die Mobilstation teilnehmergesteuert in den Betriebsmodus zu schalten.

Im folgenden wird die Erfindung anhand eines Ausführungsbeispiels bezugnehmend auf zeichnerische Darstellungen näher erläutert.

Dabei zeigen
- FIG 1: das Blockschaltbild eines Funk-Kommunikationssystems zur Steuerung sicherheitsbezogener Funktionen gemäß der Erfindung, und
- FIG 2: den Nachrichtenfluß bei der Steuerung der sicherheitsbezogener Funktionen zwischen einer Mobilstation und Netzeinrichtungen eines Kommunikationsnetzes.

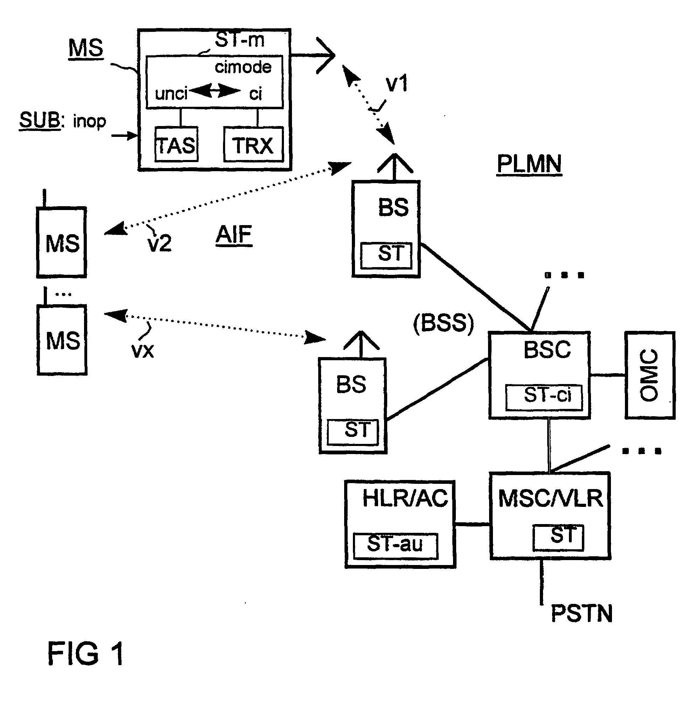

Das in FIG 1 dargestellte Funk-Kommunikationssystem entspricht in seiner Struktur einem bekannten GSM-System mit einem TDMA-Vielfachzugriffsverfahren (Time Division Multiple Access) auf einer Funkschnittstelle AIF zur Verbindung von Mobilstationen MS mit Netzeinrichtungen eines Kommunikationsnetzes PLMN. Die Erfindung ist jedoch auch auf andere Funk-Kommunikationssysteme anwendbar, die andere Vielfachzugriffsverfahren - beispielsweise mit einer CDMA-Komponente - nutzen oder einen anderen Netzaufbau aufweisen. Auf der Funkschnittstelle AIF des Funk-Kommunikationssystems laufen mehrere Verbindungen v1, v2...vx zwischen beweglichen Mobilstationen MS und ortsfesten Basisstationen BS des Kommunikationsnetzes PLMN. Eine solche Basisstation BS ist eine Funkstation, die zur Abdeckung eines Funkbereichs - z.B. einer Funkzelle - angeordnet ist, um über die Funkschnittstelle AIF die Verbindungen von/zu den Mobilstationen MS, die sich in ihrem Funkbereich aufhalten, aufbauen, abbauen und aufrechthalten zu können. Im vorliegenden Beispiel sei angenommen, daß die Verbindungen v1 und v2 von einer Basisstation BS sowie die Verbindung vx von einer anderen Basisstation BS betreut werden. Bei den Verbindungen kann es sich sowohl um abgehende als auch um ankommende Verbindungen handeln. Jede Basisstation BS ist mit einer Basisstationssteuerung BSC verbunden, deren Anzahl je nach Funkabdeckung des Kommunikationsnetzes variieren kann. Basisstationen BS und Basisstationssteuerungen BSC bilden das für die funktechnischen Funktionen zuständige Basisstationssystem BSS.

Das Kommunikationsnetz PLMN weist darüber hinaus auch Vermittlungseinrichtungen, die Mobilvermittlungsstellen MSC/VLR, auf, die untereinander vernetzt sind bzw. den Zugang zu einem anderen Kommunikationsnetz, z.B. einem Festnetz PSTN, herstellen. Dabei ist der Mobilvermittlungsstelle MSC/VLR eine dezentrale Teilnehmerdatenbasis, das Besucherregister VLR, zur Speicherung von Teilnehmerdaten der in ihrem Zuständigkeitsbereich befindlichen Funkteilnehmer zugeordnet. Die Mobilvermittlungsstelle MSC/VLR ist an die Basisstationssteuerung BSC angeschaltet. Im Kommunikationsnetz PLMN ist weiterhin zumindest eine zentrale Teilnehmerdatenbasis, das Heimatregister HLR, zur Speicherung der Teilnehmerdaten aller im Kommunikationsnetz registrierten Funkteilnehmer vorgesehen. Mit dem Heimatregister in Verbindung steht ein Authentifikationszentrum AC. Ein Operations- und Wartungszentrum OMC realisiert Kontroll- und Wartungsfunktionen im FunkKommunikationssystem bzw. für Teile davon.

Die sicherheitsbezogenen Funktionen bei der Verbindungsbehandlung umfassen die Teilnehmerauthentifikation unter Einbeziehung des Authentifikationszentrums AC sowie die Geheimhaltung der Informationen bei der Übertragung über die Funkschnittstelle AIF unter Einbeziehung des Basisstationssystems BSS. Bekanntlich dient die Teilnehmerauthentifikation zur Überprüfung der Zugangsberechtigung des Funkteilnehmers zum Kommunikationsnetz PLMN, während die Verschlüsselung bewirkt, daß auf den Übertragungskanälen ausgetauschte Informationen, insbesondere Nutzinformationen, unbefugten Dritten - beispielsweise durch Abhören der Verbindung - nicht zur Verfügung stehen. Jede Netzeinrichtung verfügt üblicherweise über eine Steuereinheit ST. Dabei übernehmen netzseitig eine Steuereinheit ST-ci des Basisstationssystems BSS - beispielsweise in der Basisstationssteuerung BSC - die Funktionen der Verschlüsselungsprozedur (ciphering) sowie eine Steuereinheit ST-au des Authentifikationszentrums AC die Funktionen der Authentifikationsprozedur.

Auch die Mobilstation MS weist Einrichtungen zur Unterstützung der sicherheitsbezogenen Funktionen auf. So verfügt sie bekanntlich über ein Teilnehmermodul - z.B. SIM-Karte - zur Speicherung eines individuellen Teilnehmerschlüssels sowie von Algorithmen für die Berechnung von Sichheitsparametern. Des weiteren weist sie eine Steuereinheit ST-m, eine Sende/Empfangseinheit TRX zum Senden und Empfangen von Funksignalen über die Funkschnittstelle AIF und Eingabemittel zur Benutzung des Endgeräts umfassen Stationstasten - z.B. zur Eingabe von alphanumerischen Zeichen und Operationen. Durch Betätigung einer gesonderten Stationstaste TAS - d.h. teilnehmergesteuert - ist die Mobilstation MS von der Steuereinheit ST-m gemäß der Erfindung in einen Betriebsmodus umschaltbar, bei dem die Verbindung v1 zur Basisstation BS abgebrochen werden kann. Dies ist dann der Fall, wenn eine vom Basisstationssystem BSS empfangene Kennung cimode, die in einer netzseitigen Verschlüsselungsanforderung mitgesendet wird, anzeigt, daß die Verbindung v1 mit unverschlüsselten Informationen benutzt wird. Dazu wertet die Steuereinheit ST-m die eintreffende Kennung cimode aus, die entweder einen Index ci (ciphered) - gleichbedeutend mit dem netzseitigen Wunsch nach verschlüsselter Informationsübertragung - oder einen Index unci (unciphered) - gleichbedeutend mit dem netzseitigen Wunsch nach unverschlüsselter Informationsübertragung - enthält.

Eine zur Betätigung der gesonderten Stationstaste TAS alternative Lösung zum teilnehmergesteuerten Umschalten in den Betriebsmodus, bei dem nur Verbindungen mit verschlüsselten Informationen zulässig sind, besteht darin, daß der Funkteilnehmer SUB bestimmte Eingabeoperationen inop - vorzugsweise menuegesteuert über beispielsweise Funktionstasten der Mobilstation MS - vornimmt. Zum Abbruch des Aufbaus der Verbindung v1 generiert die Steuereinheit ST-m der Mobilstation MS vorzugsweise eine Auslösenachricht, die zum Basistationssystem BSS gesendet wird, um dem Kommunikationsnetz PLMN das Nichtzustandekommen der Verbindung v1 zu signalisieren. Diese Nachricht kann verschlüsselt - unter Anwendung eines in der Mobilstation vorliegenden Verschlüsselungskodes - oder unverschlüsselt erfolgen. Alternativ zum Senden einer eigenen Nachricht kann von der Steuereinheit ST-m der Mobilstation MS auch die Sende/Empfangseinheit TRX für den Abbruch der Verbindung v1 vorübergehend abgeschaltet werden.

Durch die Erfindung ist sichergestellt, daß die Verbindungen v1, v2, vx... auf der Funkschnittstelle AIF nur mehr verschlüsselte Informationen enthalten, ansonsten droht der mobilstationsseitige Abbruch der jeweiligen Verbindung. Die Mobilstation MS hat folglich die Möglichkeit, teilnehmergesteuert das Abhören von Verbindungen mit unverschlüsselten Informationen zu unterbinden bzw. zu vermeiden, und braucht sich daher nicht mehr auf das Kommunikationsnetz zu verlassen, wenn dieses unverschlüsselte Informationsübertragung erlaubt und entsprechende Verbindungen initiiert, die von Dritten abhörbar sind. Befindet sich die Mobilstation in dem Betriebsmodus unci und erlaubt der Funkteilnehmer auch die unverschlüsselte Informationsübertragung über vom Kommunikationsnetz PLMN zur Verfügung gestellten Verbindungen, können auch entsprechende unverschlüsselte Verbindungen auf der Funkschnittstelle AIF aufgebaut werden.

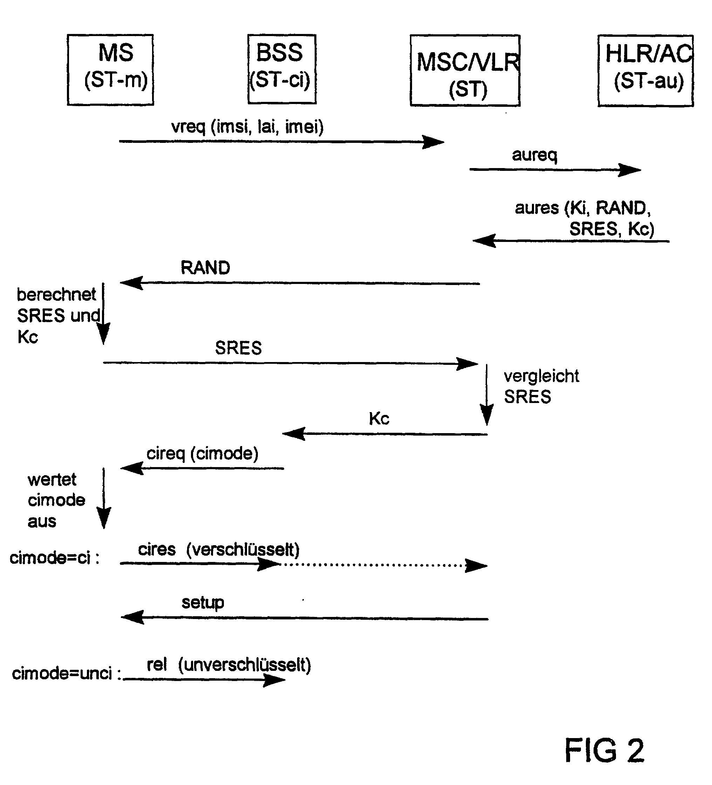

FIG 2 zeigt in schematischer Darstellung den Nachrichtenfluss zur Steuerung der sicherheitsbezogenen Funktionen im Funk-Kommunikationssystem gemäß FIG 1. Die am Nachrichtenfluß beteiligten Einrichtungen sind die Mobilstation MS mit der Steuereinheit ST-m, das Basisstationssystem BSS mit der Steuereinheit ST-ci, die Mobilvermittlungsstelle MSC/VLR mit der Steuereinheit ST und das Heimatregister HLR bzw. Authentifikationszentrum AC mit der Steuereinheit ST-au. Die Steuereinheit ST-m erzeugt eine Verbindungsaufbaunachricht vreq - beispielsweise zur Aufenthaltsregistrierung, zum Austausch von Kurznachrichten, zum "Location Update" bei Wechsel des Versorgungsbereichs durch ein anderes Besucherregister VLR usw. - und sendet sie auf einem Kontrollkanal - beispielsweise dem BCCH-Kontrollkanal (Broadcast Control Channel) - zur Mobilvermittlungsstelle MSC/ VLR. Die Anforderung vreq enthält eine Teilnehmeridentität imsi, eine Ortsinformation lai und eine Gerätekennung imei. Das Besucherregister VLR leitet daraufhin die Authentifikation durch Senden einer Authentifikationsanfrage aureq an das Heimatregister HLR bzw. Authentifikationszentrum AC ein. Falls dem Besucherregister VLR die Teilnehmerdaten noch nicht bekannt sind, fordert sie mit diesen Daten vom Heimatregister HLR zusätzlich die Sicherheitsparameter (triplets) an. Das Heimatregister HLR holt sich die geforderten Sicherheitsparameter vom Authentifikationszentrum AC ab und sendet sie zusammen mit den Teilnehmerdaten in einer Authentifikationsantwort aures in der Gegenrichtung zurück. Die Sicherheitsparameter umfassen eine Zufallszahl RAND, einen individuellen Teilnehmerschlüssel Ki, eine Authentifikationsantwort SRES (Signed Response) und einen Verschlüsselungskode Kc.

Die Mobilvermittlungsstelle MSC/VLR sendet die Zufallszahl RAND über die netzseitig für die Mobilstation MS zuständige Basisstation des Basisstationssystems BSS zum Endgerät. Die Mobilstation MS bzw. deren Steuereinheit ST-m berechnet ihrerseits die Authentifikationsantwort SRES anhand eines vorgebbaren Algorithmus aus der übermittelten Zufallszahl RAND und des im Teilnehmermodul gespeicherten Teilnehmerschlüssels. Darüber hinaus bestimmt sie den Verschlüsselungskode Kc anhand eines anderen Algorithmus und den vorstehend genannten Parametern. Anschließend sendet sie die berechnete Authentifikationsantwort SRES für einen Vergleich mit der netzseitig gespeicherten Authentifikationsantwort SRES zum Besucherregister VLR. Ergibt der Vergleich eine Identität der Antworten SRES, ist die Teilnehmerauthentifikation erfolgreich, andererseits kann ein Eintrag in eine Sicherheitsdatei des Besucherregisters VLR erfolgen. Ausgehend von der erfolgreich durchgeführten Authentifikation sendet das Besucherregister VLR den berechneten Verschlüsselungskode Kc zum Basisstationssystem BSS, das für die netzseitige Verschlüsselung der Informationen auf der Funkschnittstelle verantwortlich ist.

Das Basisstationssystem BSS generiert eine Verschlüsselungsanforderung cireq zum Verschlüsseln der auf der Funkschnittstelle zu übertragenden Informationen in Richtung Mobilstation MS und sendet darin die Kennung cimode, ob das Kommunikationsnetz PLMN Verbindungen auf der Funkschnittstelle mit verschlüsselten Informationen oder mit unverschlüsselten Informationen wünscht, mit. Vorzugsweise wird die Kennung cimode von der in der Basisstationssteuerung enthaltenen Steuereinheit ST-ci erzeugt und in die Nachricht cireq eingefügt. Von der Steuereinheit ST-m wird die empfangene Kennung cimode ausgewertet. Falls die Mobilstation MS teilnehmergesteuert in den Betriebsmodus mit dem Index ci geschaltet ist und die Auswertung der Kennung cimode nur die Nutzung von Verbindungen mit verschlüsselten Informationen identifiziert, generiert sie eine Verschlüsselungsantwort cires, in der die Informationen bereits verschlüsselt mit dem Kode Kc in der Aufwärtsrichtung zum Kommunikationsnetz bzw. zur Mobilvermittlungsstelle MSC/VLR übertragen werden. Im Anschluß an die Nachricht cires wird der Verbindungsaufbau fortgesetzt und eine Verbindungsaufbauantwort setup von der Mobilvermittlungsstelle MSC/VLR in der Abwärtsrichtung zur Mobilstation MS übertragen.

Andernfalls, wenn folglich die Auswertung der Kennung cimode anhand des Index unci die Nutzung von Verbindungen mit unverschlüsselten Informationen identifiziert, generiert die Steuereinheit ST-m der Mobilstation MS eine Auslösenachricht rel. Die Auslösenachricht rel signalisiert, daß die Verbindung abgebrochen wird, da die empfangene Kennung cimode auch unverschlüsselte Informationsübertragung zuläßt, die Mobilstation MS aber sich in dem Betriebsmodus für lediglich verschlüsselte Verbindungen befindet. Das Abhören unverschlüsselter Verbindungen wird vom Funkteilnehmer nicht gewünscht. Daher hat er die Mobilstation MS in den zugehörigen Betriebsmodus geschaltet, um eine abhörsichere Übertragung im Bedarfsfall teilnehmergesteuert gewährleisten zu können. Die Auslösenachricht rel kann verschlüsselt oder unverschlüsselt über die Funkschnittstelle zum Basisstationssystem BSS gesendet werden.

## Patentansprüche

1. Verfahren zur Steuerung von sicherheitsbezogenen Funktionen bei der Verbindungsbehandlung in einem Funk-Kommunikationssystem mit einer Funkschnittstelle (AIF) zur Anbindung von Mobilstationen (MS) an ein Kommunikationsnetz (PLMN), bei dem
- sobald ein Verbindungsaufbau von der Mobilstation (MS) initiiert ist, eine Teilnehmerauthentifikation zur Überprüfung der Zugangsberechtigung eines Funkteilnehmers zum Kommunikationsnetz (PLMN) zwischen der Mobilstation (MS) und dem Kommunikationsnetz (PLMN) durchgeführt wird, und
- eine Verschlüsselungsanforderung (cireq) zur Geheimhaltung der Informationen auf der Funkschnittstelle vom Kommunikationsnetz (PLMN) an die Mobilstation (MS) gesendet wird,
**dadurch gekennzeichnet,**
**daß** die Verschlüsselungsanforderung (cireq) mit einer Kennung (cimode), ob das Kommunikationsnetz (PLMN) Verbindungen auf der Funkschnittstelle (AIF) mit verschlüsselten Informationen oder mit unverschlüsselten Informationen wünscht, von der Mobilstation (MS) empfangen und ausgewertet wird, und
**daß** die Mobilstation (MS) teilnehmergesteuert in einen Betriebsmodus umschaltbar ist, bei dem die Verbindung (z.B. v1) abgebrochen wird, wenn die empfangene Kennung (cimode) die Verbindungen mit unverschlüsselten Informationen zuläßt.

2. Verfahren nach Anspruch 1,
**dadurch gekennzeichnet,**
**daß** von der Mobilstation (MS) eine Nachricht (rel) zum Auslösen der Verbindung (z.B. v1) über die Funkschnittstelle (AIF) zum Kommunikationsnetz (PLMN) gesendet wird.

3. Verfahren nach Anspruch 1,
**dadurch gekennzeichnet,**
**daß** von der Mobilstation (MS) die zum Senden und Empfangen von Funksignalen vorgesehene Sende/Empfangseinheit (TRX) für den Abbruch der Verbindung (z.B. v1) vorübergehend abgeschaltet wird.

4. Verfahren nach einem der vorhergehenden Ansprüche,
**dadurch gekennzeichnet,**
**daß** durch Betätigung einer gesonderten Stationstaste (TAS) die Mobilstation (MS) teilnehmergesteuert in den Betriebsmodus geschaltet wird.

5. Verfahren nach einem der vorhergehenden Ansprüche,
**dadurch gekennzeichnet,**
**daß** durch Eingabeoperationen (inop) die Mobilstation (MS) teilnehmergesteuert in den Betriebsmodus geschaltet wird.

6. Funk-Kommunikationssystem zur Steuerung von sicherheitsbezogenen Funktionen bei der Verbindungsbehandlung, mit
- einer Funkschnittstelle (AIF) zur Anbindung von Mobilstationen (MS) an ein Kommunikationsnetz (PLMN),
- Netzeinrichtungen (BSS, MSC/VLR, HLR/AC) zur Durchführung einer Teilnehmerauthentifikation für eine Überprüfung der Zugangsberechtigung eines Funkteilnehmers zum Kommunikationsnetz (PLMN), sobald ein Verbindungsaufbau von der Mobilstation (MS) initiiert ist, und mit
- Netzeinrichtungen (BSS) zum Senden einer Verschlüsselungsanforderung (cireq) für eine Geheimhaltung der Informationen auf der Funkschnittstelle an die Mobilstation (MS),
**dadurch gekennzeichnet,**
**daß** die Netzeinrichtungen (BSS) eine Steuereinheit (ST-ci) zum Einfügen einer Kennung (cimode), ob das Kommunikationsnetz (PLMN) Verbindungen auf der Funkschnittstelle mit verschlüsselten Informationen oder mit unverschlüsselten Informationen wünscht, in die Verschlüsselungsanforderung (cireq) aufweisen,
**daß** die Mobilstation (MS) eine Steuereinheit (ST-m) zum Auswerten der empfangenen Kennung (cimode) aufweist, und
**daß** die Mobilstation (MS) teilnehmergesteuert in einen Betriebsmodus umschaltbar ist, bei dem die Steuereinheit (ST-m) einen Abbruch der Verbindung (z.B. v1) veranlaßt, wenn die empfangene Kennung (cimode) die Verbindungen mit unverschlüsselten Informationen zuläßt.

7. Mobilstation zur Steuerung von sicherheitsbezogenen Funktionen bei der Verbindungsbehandlung in einem Funk-Kommunikationssystem mit einer Funkschnittstelle (AIF) zur Anbindung der Mobilstation (MS) an ein Kommunikationsnetz (PLMN), das Netzeinrichtungen (BSS, MSC/VLR, HLR/AC) zur Durchführung einer Teilnehmerauthentifikation für eine Überprüfung der Zugangsberechtigung eines Funkteilnehmers zum Kommunikationsnetz (PLMN), sobald ein Verbindungsaufbau von der Mobilstation (MS) initiiert ist, und Netzinrichtungen (BSS) zum Senden einer Verschlüsselungsanforderung (cireq) für eine Geheimhaltung der Informationen auf der Funkschnittstelle an die Mobilstation (MS) aufweist,
**dadurch gekennzeichnet,**
**daß** die Mobilstation (MS) eine Steuereinheit (ST-m) zum Auswerten einer vom Kommunikationsnetz (PLMN) übersandten Kennung (cimode) aufweist, die angibt, ob das Kommunikationsnetz (PLMN) Verbindungen auf der Funkschnittstelle (AIF) mit verschlüsselten Informationen oder mit unverschlüsselten Informationen wünscht, und
**daß** die Mobilstation (MS) teilnehmergesteuert in einen Betriebsmodus umschaltbar ist, bei dem die Steuereinheit (ST-m) einen Abbruch der Verbindung (z.B. v1) veranlaßt, wenn die empfangene Kennung (cimode) die Verbindungen mit unverschlüsselten Informationen zuläßt.

8. Mobilstation nach Anspruch 7,
**dadurch gekennzeichnet,**
**daß** die Steuereinheit (ST-m) der Mobilstation (MS) eine Nachricht (rel) zum Auslösen der Verbindung erzeugt und über die Funkschnittstelle (AIF) zum Kommunikationsnetz (PLMN) sendet.

9. Mobilstation nach Anspruch 7 oder 8,
**dadurch gekennzeichnet,**
**daß** eine gesonderte Stationstaste (TAS) vorgesehen ist, durch deren Betätigung teilnehmergesteuert die Mobilstation (MS) in den Betriebsmodus umschaltbar ist.

10. Mobilstation nach Anspruch 7, 8 oder 9,
**dadurch gekennzeichnet,**
**daß** Eingabeoperationen (inop) vorgesehen sind, durch die die Mobilstation (MS) teilnehmergesteuert in den Betriebsmodus umschaltbar ist.

## Claims

1. Method for controlling security-related functions for call handling in a radio communications system having an air interface (AIF) for linking mobile stations (MS) to a communications network (PLMN), in which
- as soon as the setting-up of a call is initiated by the mobile station (MS), a subscriber authentication process is carried out between the mobile station (MS) and the communications network (PLMN) in order to check the access authorization of a radio subscriber to the communications network (PLMN,, and
- a ciphering request (cireq) for secrecy of the information on the air interface of the communications network (PLMN) is sent to the mobile station (MS)
**characterized**
**in that** the ciphering request (cireq) having an identifier (cimode) to determine whether the communications network (PLMN) wishes to have connections on the air interface (AIF) with ciphered information or with unciphered information, is received and evaluated by the mobile station (MS) and
**in that** the mobile station (MS) can be switched under subscriber control to an operating mode in which the connection (for example v1) is terminated if the received identifier (cimode) allows connections with unciphered information.

2. Method according to Claim 1,
**characterized**
**in that** a message (rel) to clear the connection (for example v1) is sent by the mobile station (MS) via the air interface (AIF) to the communications network (PLMN).

3. Method according to Claim 1,
**characterized**
**in that** the transmitting/receiving unit (TRX), whose purpose is to transmit and receive radio signals, is temporarily switched off by the mobile station (MS) in order to terminate the connection (for example v1).

4. Method according to one of the preceding claims,
**characterized**
**in that** the mobile station (MS) is switched under subscriber control to the operating mode by operating a special station key (TAS).

5. Method according to one of the preceding claims,
**characterized**
**in that** the mobile station (MS) is switched under subscriber control to the operating mode by means of input operations (inop).

6. Radio communications system for controlling security-related functions for call handling, having
- an air interface (AIF) for linking mobile stations (MS) to a communications network (PLMN),
- network devices (BSS, MSC/VLR, HLR/AC) for carrying out subscriber authentication for checking the access authorization of a radio subscriber to the communications network (PLMN) as soon as the setting-up of a call is initiated by the mobile station (MS), and having
- network devices (BSS) for sending a ciphering request (cireq) for secrecy of the information on the air interface to the mobile station (MS).
**characterized**
**in that** the network devices (BSS) have a control unit (ST-ci) for insertion of an identifier (cimode) into the ciphering request (cireq) to determine whether the communications network (PLMN) wishes to have connections on the air interface with ciphered information or with unciphered information,
**in that** the mobile station (MS) has a control unit (ST-m) for evaluation of the received identifier (cimode), and
**in that** the mobile station (MS) can be switched under subscriber control to an operating mode in which the control unit (ST-m) allows termination of the connection (for example v1) when the received identifier (cimode) allows connections with unciphered information.

7. Mobile station for controlling security-related functions for call handling in a radio communications system having an air interface (AIF) for linking the mobile station (MS) to a communications network (PLMN), which has network devices (BSS, MSC/VLR, HLR/AC) for carrying out subscriber authentication for checking the access authorization of a radio subscriber to the communications network (PLMN) as soon as the setting-up of a call is initiated by the mobile station (MS), and has network devices (BSS) for sending a ciphering request (cireg) for secrecy of the information on the air interface to the mobile station (MS),
**characterized**
**in that** the mobile station (MS) has a control unit (ST-m) for evaluation of an identifier (cimode) which is sent from the communications network (PLMN) and indicates whether the communications network (PLMN) wishes to have connections on the air interface (AIF) with ciphered information or with unciphered information, and
**in that** the mobile station (MS) can be switched under subscriber control to an operating mode in which the control unit (ST-m) allows termination of the connection (for example v1) when the received identifier (cimode) allows connections with unciphered information.

8. Mobile station according to Claim 7,
**characterized**
**in that** the control unit (ST-m) in the mobile station (MS) produces a message (rel) to clear the connection, and sends this message via the air interface (AIF) to the communications network (PLMN).

9. Mobile station according to Claim 7 or 8,
**characterized**
**in that** a separate station key (TAS) is provided, whose operation allows the mobile station (MS) to be switched to the operating mode, under subscriber control.

10. Mobile station according to Claim 7, 8 or 9,
**characterized**
**in that** input operations (inop) are provided, by means of which the mobile station (MS) can be switched to the operating mode under subscriber control.

## Revendications

1. Procédé pour commander des fonctions liées à la sécurité lors de la gestion de communications dans un système de radiocommunication comprenant une interface radio (AIF) servant à relier des stations mobiles (MS) à un réseau de transmission (PLMN), dans lequel
- dès que l'établissement d'une liaison est initié par la station mobile (MS), une authentification de l'usager est exécutée entre la station mobile (MS) et le réseau de transmission (PLMN) pour vérifier l'autorisation d'accès d'un abonné au réseau de transmission (PLMN), et
- une demande de cryptage (cireq) est envoyée par le réseau de transmission (PLMN) à la station mobile (MS) pour assurer la confidentialité des informations sur l'interface radio,
**caractérisé en ce que** la demande de cryptage (cireq) est reçue et analysée par la station mobile (MS) avec un code (cimode) indiquant si le réseau de transmission (PLMN) souhaite voir transiter sur l'interface radio (AIF) des communications contenant des informations cryptées ou des informations non cryptées, et
**en ce que** la station mobile (MS), commandée par l'usager, peut être commutée dans un mode de fonctionnement dans lequel la communication (par exemple v1) est interrompue lorsque le code (cimode) reçu autorise les communications contenant des informations non cryptées.

2. Procédé selon la revendication 1, **caractérisé en ce que** la station mobile (MS) envoie au réseau de transmission (PLMN), par le biais de l'interface radio (AIF), un message (rel) pour la libération de la communication (par exemple v1).

3. Procédé selon la revendication 1, **caractérisé en ce que** la station mobile (MS) déconnecte provisoirement l'unité émettrice/réceptrice (TXR) prévue pour l'émission et la réception de signaux radio pour interrompre la communication (par exemple v1).

4. Procédé selon l'une des revendications précédentes, **caractérisé en ce que**, en actionnant une touche de station (TAS) spéciale, l'usager commande la commutation de la station mobile (MS) dans le mode de fonctionnement.

5. Procédé selon l'une des revendications précédentes, **caractérisé en ce que** l'usager commande la commutation de la station mobile (MS) dans le mode de fonctionnement grâce à des opérations d'entrée (inop).

6. Système de radiocommunication pour commander des fonctions liées à la sécurité lors de la gestion de communications, comprenant
- une interface radio (AIF) pour relier des stations mobiles (MS) à un réseau de transmission (PLMN),
- des équipements de réseau (BSS, MSC/VLR, HLR/AC) permettant de procéder à une authentification des usagers pour vérifier l'autorisation d'accès d'un abonné au réseau de transmission (PLMN) dès que la station mobile (MS) initie l'établissement d'une communication, et comprenant
des équipements de réseau (BSS) pour envoyer à la station mobile (MS) une demande de cryptage (cireq) pour la confidentialité des informations sur l'interface radio,
**caractérisé en ce que**
les équipements de réseau (BSS) comprennent une unité de commande (ST-ci) permettant d'insérer dans la demande de cryptage (cireq) un code (cimode) indiquant si le réseau de transmission (PLMN) souhaite voir transiter sur l'interface radio des communications contenant des informations cryptées ou des informations non cryptées, et
**en ce que** la station mobile (MS) comprend une unité de commande (ST-m) servant à évaluer le code (cimode) reçu, et
**en ce que** la station mobile (MS), commandée par l'usager, peut être commutée dans un mode de fonctionnement dans lequel l'unité de commande (ST-m) provoque une interruption de la communication (par exemple v1) lorsque le code (cimode) reçu autorise les communications contenant des informations non cryptées.

7. Station mobile pour commander des fonctions liées à la sécurité lors de la gestion de communications dans un système de radiocommunication, comprenant une interface radio (AIF) pour relier la station mobile (MS) à un réseau de transmission (PLMN) qui comprend des équipements de réseau (BSS, MSC/VLR, HLR/AC) permettant de procéder à une authentification des usagers pour vérifier l'autorisation d'accès d'un abonné au réseau de transmission (PLMN) dès que la station mobile (MS) initie l'établissement d'une communication, et des équipements de réseau (BSS) pour envoyer à la station mobile (MS) une demande de cryptage (cireq) pour la confidentialité des informations sur l'interface radio,
**caractérisée en ce que**
la station mobile (MS) comprend une unité de commande (ST-m) servant à analyser un code (cimode) envoyé par le réseau de transmission (PLMN) et indiquant si le réseau de transmission (PLMN) souhaite voir transiter sur l'interface radio (AIF) des communications contenant des informations cryptées ou des informations non cryptées, et
**en ce que** la station mobile (MS), commandée par l'usager, peut être commutée dans un mode de fonctionnement dans lequel l'unité de commande (ST-m) provoque une interruption de la communication (par exemple v1) lorsque le code (cimode) reçu autorise les communications contenant des informations non cryptées.

8. Station mobile selon la revendication 7, **caractérisée en ce que** l'unité de commande (ST-m) de la station mobile (MS) produit un message (rel) pour libérer la communication et l'envoie au réseau de transmission (PLMN) par le biais de l'interface radio (AIF).

9. Station mobile selon l'une des revendications 7 ou 8, **caractérisée en ce que** l'on prévoit une touche de station (TAS) spéciale dont l'actionnement, commandé par l'usager, permet de commuter la station mobile (MS) dans le mode de fonctionnement.

10. Station mobile selon l'une des revendications 7, 8 ou 9, **caractérisée en ce que** l'on prévoit des opérations d'entrée (inop) permettant à l'usager de commander la commutation de la station mobile (MS) dans le mode de fonctionnement.
